# EUROPEAN PATENT SPECIFICATION

(11) **EP 4 336 355 B1**
(45) Date of publication and mention of the grant of the patent: **04.03.2026**
(21) Application number: 22819472.6
(22) Date of filing: 06.06.2022
(51) Int. Cl.: G06F 9/451, H04M 1/7243

(54) **INTERACTION METHOD AND MEDIUM, AND ELECTRONIC DEVICE**
INTERAKTIONSVERFAHREN UND MEDIUM UND ELEKTRONISCHE VORRICHTUNG
PROCÉDÉ D'INTERACTION, SUPPORT ET DISPOSITIF ÉLECTRONIQUE

(30) Priority: 11.06.2021 CN 202110657137
(43) Date of publication of application: 13.03.2024
(73) Proprietor: Beijing Zitiao Network Technology Co., Ltd., Beijing 100190 (CN)
(72) Inventor: BAI, Xiaoshuang, Beijing 100190 (CN); GU, Chenqu, Beijing 100190 (CN); ZHAN, Siyu, Beijing 100190 (CN); CHANG, Xiaojing, Beijing 100190 (CN)
(74) Representative: Marks & Clerk LLP
(86) International application number: PCT/CN2022/097104
(87) International publication number: WO 2022/257874

(56) References cited:
- EP-A1- 4 020 194
- WO-A1-2021/031701
- CN-A- 106 844 641
- CN-A- 107 450 905
- CN-A- 108 632 135
- CN-A- 113 419 800
- US-A1- 2018 196 806
- US-A1- 2018 210 888
- US-A1- 2019 347 069
- US-A1- 2020 374 243

## Description

This application claims priority to Chinese Patent Application No. 202110657137.4, titled "INTERACTION METHOD AND APPARATUS, MEDIUM, AND ELECTRONIC DEVICE", filed on June 11, 2021 with the China National Intellectual Property Administration.

### FIELD

The present disclosure relates to the field of computer technology, in particular to an interaction method and apparatus, a medium and an electronic device.

### BACKGROUND

In the conventional mobile Internet business, the production and interaction based on content consumption products are becoming increasingly frequent. Through content consumption products, users can obtain consulting information, entertainment information, dynamic information of friends, etc., and express their interests in the viewing content through interactions such as likes.

Nevertheless, the existing interaction methods are relatively simple, which cannot effectively enhance the enthusiasm for interactive participation.

In WO 2021/031701 A1, a display control method is provided. The method includes: receiving a first input performed by a user in a case that a first communication window is displayed on a screen of a terminal device; and displaying at least one first control on the screen in response to the first input. The at least one first control is associated with a display content of the first communication window, each of the at least one first control respectively corresponds to at least one object, and the display content of the first communication window includes at least one of a communication title, a communication content and a communication object.

In US 2018/210888 A1, a method for displaying a picture search result page is provided. The method includes: obtaining a search term input by a user; determining a timeliness event corresponding to the search term; displaying a search result page corresponding to the search term, and increasing a display effect corresponding to the timeliness event on the search result page.

In US 2020/374243 A1, a process for providing response suggestions is provided. In one example process, a textual representation of a message is received. Based on the textual representation of the message, one or more response categories and a predetermined number of suggested inputs corresponding to each of the one of more response categories are obtained. Based on the predetermined number of suggested inputs corresponding to each of the one of more response categories, one or more suggested inputs for each of the one or more response categories are determined. The one or more suggested inputs are provided as response suggestions to the message.

In US 2019/347069 A1, a method for allowing access to a computer system using an interface device employing proprioception is provided, which is related to employing an interface device with a touch display that allows engagement, and after doing so, provides audible cues associated with said engagement.

### SUMMARY

The invention is set out in the appended set of claims. A purpose of the present disclosure is to provide an interaction method and apparatus, a medium and an electronic device, to solve the aforementioned interaction problems associated with application scenarios.

Compared with the conventional technology, the solutions of the embodiments of the present disclosure at least have beneficial effects below.

An interaction method and apparatus, a medium and electronic device based on application scenario information are provided according to the present disclosure. A target object including application scenario information is acquired; and a first interactive control is generated in a first interactive area of the first interface, based on the application scenario information, where the first interactive control is associated with the application scenario information. The first interactive control is changed from a first state to a second state in response to a triggering on the first interactive control. In this way, the interaction process is associated with the application scenario information of the target object, thereby enriching the interaction process in the specific application scenarios and improving the enthusiasm of both interacting parties. In addition, since the interactive information can automatically configure the standard interactive content based on the application scenario information, the interactions are simpler and more convenient, to further improve the enthusiasm for the interactions.

### BRIEF DESCRIPTION OF THE DRAWINGS

The drawings herein are incorporated into the specification and constitute a part of the specification, which show embodiments which comply with the present disclosure. The drawings and the specification are used as a whole to explain the principle of the present disclosure. Apparently, the drawings in the following description are only some embodiments of the present disclosure, and those skilled in the art can obtain other drawings according to these drawings without creative efforts. In the drawings:
Figure 1 is an application scenario diagram of an interaction method according to an embodiment of the present disclosure;
Figure 2 is a flowchart of an interaction method according to an embodiment of the present disclosure;
Figure 3 is a schematic diagram of a first interface in an interaction method according to an embodiment of the present disclosure;
Figure 4 is a schematic diagram of a second interface in an interaction method according to an embodiment of the present disclosure;
Figure 5 is a flowchart of an interaction method according to another embodiment of the present disclosure;
Figure 6 is a schematic diagram of a third interface in an interaction method according to another embodiment of the present disclosure;
Figure 7 is a schematic structural diagram of an interaction apparatus according to an embodiment of the present disclosure;
Figure 8 is a schematic structural diagram of an interaction apparatus according to another embodiment of the present disclosure; and
Figure 9 is a schematic diagram of a connection structure of an electronic device according to an embodiment of the present disclosure.

### DETAILED DESCRIPTION OF EMBODIMENTS

In order to make the purpose, technical solutions and advantages of the present disclosure clearer, the present disclosure will be further described in detail below in conjunction with the accompanying drawings. Apparently, the described embodiments are only some embodiments, rather than all embodiments of the present disclosure. Based on the embodiments of the present disclosure, all other embodiments obtained by the skilled in the art without making creative efforts belong to the protection scope of the present disclosure.

Terms used in the embodiments of the present disclosure are for the purpose of describing specific embodiments only and are not intended to limit the present disclosure. The singular forms "a/an", "said" and "the" used in the embodiments of the present disclosure and the appended claims are also intended to include plural forms, unless the context clearly indicates otherwise, "a plurality of/multiple" generally contain at least two.

It should be understood that the term "and/or" used herein is only an association relationship describing associated objects, which indicates that there may be three relationships. For example, A and/or B, which may indicate that the following three relationships: A exists alone, A and B exist simultaneously, and B exists alone. In addition, the character "/" hereinafter generally indicates that the contextual objects are an "or" relationship.

It should be understood that although the terms first, second, third and the like may be used to describe some features in the embodiments of the present disclosure, these features should not be limited to these terms. These terms are used only to distinguish these features from each other. For example, without departing from the scope of the embodiments of the present disclosure, a first feature may also be called a second feature; similarly, the second feature may also be called the first feature.

Depending on the context, hereinafter, the words "if", "in a case" may be interpreted as "at" or "when" or "in response to determining" or "in response to detecting". Similarly, depending on the context, the phrases "if it is determined" or "if it is detected (the stated condition or event)" could be interpreted as "when it is determined" or "in response to the determination" or "when it is detected (the stated condition or event)" or "in response to detection of (the stated condition or event)".

It should also be noted that the term such as "include", "comprise" or any other variants thereof is intended to cover a non-exclusive inclusion. Therefore, an article or a device including a series of elements includes not only the disclosed elements but also other elements that are not clearly enumerated, or further includes inherent elements of the article or device. Unless expressively limited, the statement "including a..." does not exclude the case that other similar elements may exist in the article or device other than enumerated elements.

Optional embodiments of the present disclosure will be described in detail below in conjunction with the drawings.

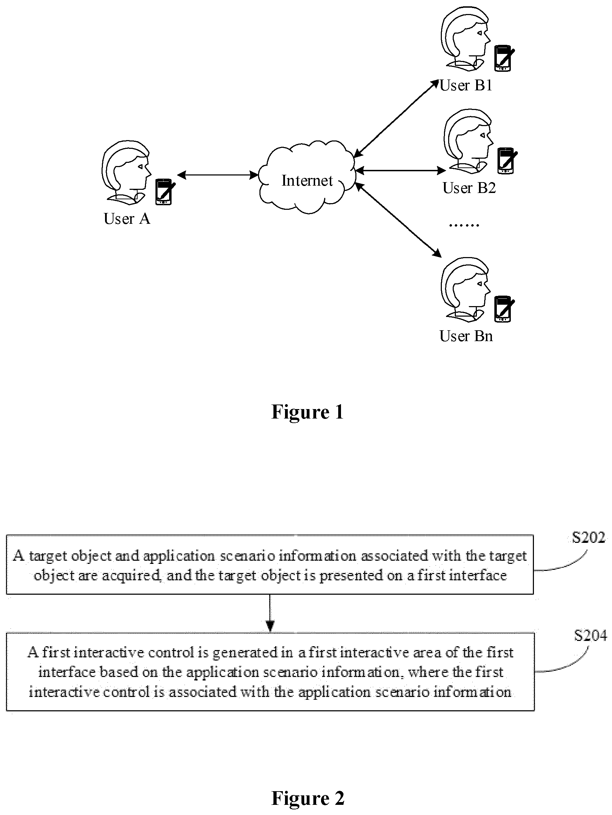

As shown in Figure 1, Figure 1 is an application scenario diagram according to an embodiment of the present disclosure. The application scenario is that multiple users operate their respective clients installed on the terminal devices through terminal devices such as mobile phones, and the clients perform data communication through the Internet while maintaining data communication with the server. As a specific application scenario, for example, after user A creates and posts a target object in the client, the target object is forwarded to the client of at least one user B (for example, including user B1, user B2 ... user Bn) through the Internet (may include a server). After receiving the target object at the client, the user B interacts with user A through the interface at the clients. The above user A and user B are only used to distinguish and describe the sender and receiver in the process of sending and receiving information. For the same client, such as a short video client, when a user posts a target object, it acts as the user A. While the user receives the target object from other user, it acts as the user B. The above target objects may include long video files, short video files, dynamic picture files, static picture files, text files, etc. The target object may be content with specific application scenario information, such as a birthday scenario, Mid-Autumn Festival scenario, Spring Festival scenario, Dragon Boat Festival scenario, wedding scenario, etc. The examples of the application scenario will not exhaustively describe here, any interaction process via the target object based on the application scenario is included in the implementations of the present disclosure. To specifically illustrate the specific situation of the embodiments of the present disclosure, hereinafter the birthday scenario will be mainly used as an example for illustration, but the application scenario is not limited to the birthday scenario.

As shown in Figure 2, according to the specific implementation of the present disclosure, an interaction method based on the application scenario is provided in the present disclosure. All data of the user acquired in this embodiment has got permission from the user, which is used legally and reasonably. For example, by providing a function setting option is provided, and user data is acquired after user active permission is accepted.

An interaction method is provided according to the present disclosure, which is applied to a consumption side of the target object. The interaction method may include steps S202 and S204 as follows.

In Step S202, a target object and application scenario information associated with the target object are acquired, and the target object is presented on a first interface.

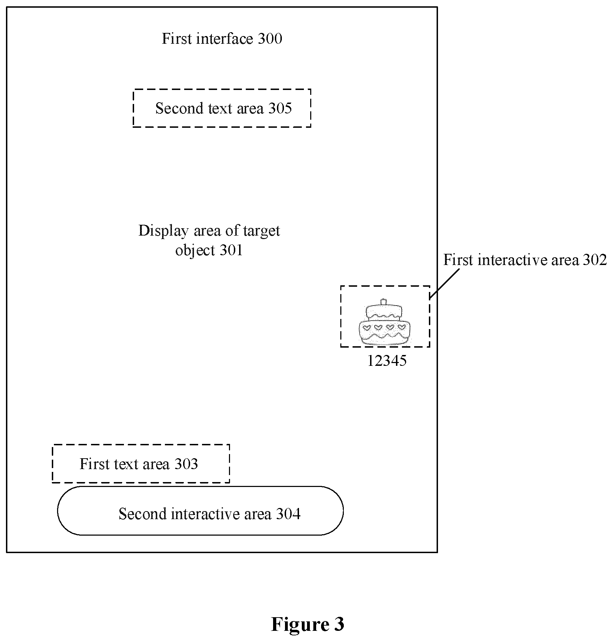

As shown in Figure 1, the user B receives the target object posted by the user A through the Internet, and displays the received target object on the client of the user B. For example, the target object is played in a display area 301 of the first interface, as shown in Figure 3. Where, the user B and user A may be pre-associated users, may be unilaterally associated users, or may be unassociated users. The target object may include at least one of a long video file, a short video file, a dynamic picture file, a static picture file, and a text file. The target object may be pushed according to an association relationship between user B and user A, so as to ensure that users with the association relationship can receive the target object posted by the other party in the most timely manner.

The application scenario information is information that matches the content of the target object. As an example, in the case that the content of the target object is a birthday video or picture file, the application scenario information is determined to be a birthday scenario. As another example, the content of the target object is a video or picture file related to the Mid-Autumn Festival reunion, the application scenario information is determined to be a Mid-Autumn Festival scenario.

In an optional implementation, the application scenario information is determined by: determining the application scenario information of the target object based on content information in the target object.

In an optional implementation, the content information includes image information, audio information, and/or text information. The text information includes topic information and/or title information. The above-mentioned specific information may be applied in combinations or separately. It is more accurate to identify the application scenario when multiple pieces of information are applied in combinations.

In the case that the content information includes image information, the key frame in the image information may be extracted under the permission of the user, and image recognition can be performed on the key frame, such as identifying the element with a preset image tag in the image information. For example, it is identified whether an element such as a moon cake is in the image information. When the element such as the moon cake is identified, the application scenario may be basically determined as a Mid-Autumn Festival scenario.

In the case that the content information includes audio information, the audio content in the audio information may be extracted under the permission of the user, and voice recognition can be performed on the audio content. For example, when a song or music such as "Happy Birthday to you" is identified in the audio content, the application scenario may be basically determined as a birthday scenario.

In the case that the content information includes text information, the text information may be extracted from the first text area 303 under the permission of the user, and the application scenario information may be identified based on the text information. As shown in Figure 3, the first text area 303 includes topic information and/or title information. The topic information is information which indicates a topic involved in the target object and is inputted by user A while posting the target object. The title information is information which indicates the subject matter of the target object and is inputted by user A while posting the target object. One or more pieces of topic information may be added at one time. For example, when the target object is in a birthday scenario, the topic information may be "#birthday", "#cake" and so on. Under the permission of the user, the topic information may be extracted, and application scenario information may be identified based on the topic information. Under the permission of the user, the title information may also be extracted from the first text area 303, and the application scenario information may be identified based on the title information. For example, when the title information is identified as "XXX's birthday", the application scenario may be basically determined as a birthday scenario.

As shown in Figure 3, the first interface 300 further includes a second text area 305. The second text area 305 is an area for adding text content when user A makes the target file; or an area for adding the text in the video frame acquired through image recognition. The added text is used to inform user B of the information that the target object desires to convey. For example, "Happy Birthday to me" may be input at the second text area 305, and then the text information may be extracted from the second text area 305. Subsequently, the application scenario information is identified based on the extracted text information. For example, when the text information is "Happy birthday to me", it may basically be determined as a birthday scenario.

In an optional implementation, the application scenario information may further be determined by: determining the application scenario information of the target object based on a preset time.

The preset time includes the festival preset time formed based on a general calendar. The method of acquiring the calendar includes, but is not limited to, acquiring through the communication network of the terminal. The festival preset time may be acquired through the calendar application program of the terminal. The preset time may be a traditional festival such as the Spring Festival, Mid-Autumn Festival, National Day, Dragon Boat Festival and the like. The preset time may further include an anniversary preset time formed based on the date inputted by user A, such as birthdays, wedding anniversaries and other specific dates, which is acquired after user active permission is accepted. Based on a time tag of traditional festival or anniversary, the application scenario information of the target object may be automatically identified.

In an optional implementation, the determining the application scenario information of the target object based on the preset time and determining the application scenario information of the target object based on the content information in the target object may be combined in two or more manner, to determine the application scenario information more accurately. For example, based on the combination of the image information of the cake and the time information of the birthday date, the target object is determined as a birthday application scenario, which will not be enumerated herein.

In Step S204, a first interactive control is generated in a first interactive area of the first interface based on the application scenario information, where the first interactive control is associated with the application scenario information.

As shown Figure 3, a first interactive control, such as a birthday cake icon, is generated in the first interactive area 302 of the first interface 300 at the client of user B, based on the above determined application scenario information. Unlit candles may be displayed on the birthday cake icon. The first interactive control based on the birthday scenario information is not unique. Multiple first interactive controls may be pre-designed. For example, multiple birthday cakes with different shapes and patterns may be designed.

In an optional implementation, the application scenario information includes birthday scenario information. The first interactive control includes multiple cake icons corresponding to the birthday scenario information that are optional for displaying.

In an optional implementation, the application scenario information includes wedding anniversary scenario information. The first interactive control includes multiple marriage certificate icons or heart icons corresponding to the wedding anniversary scenario information that are optional for displaying.

In an optional implementation, the application scenario information includes Mid-Autumn Festival scenario information. The first interactive control includes moon cake icons corresponding to the Mid-Autumn Festival scenario information.

As an optional implementation, the application scenario information includes Dragon Boat Festival scenario information. The first interactive control includes a rice dumpling icon corresponding to the Dragon Boat Festival scenario information.

The first interactive control which is automatically generated, matches the application scenario information of the target object. Thus, the form of interaction between user B and user A is enriched, the interactive information expression between user B and user A at the special moments is improved, the interactive enthusiasm and interest of both parties are improved and the overall interactive activity of client user is elevated.

In Step S206, the first interactive control is changed from a first state to a second state in response to a triggering instruction on the first interactive control.

As shown in Figure 3, the user B interacts with the user A through touch in the first interactive area. The first interactive control is located in the first interactive area 302, and the state of the first interactive control is changed in response to the trigger instruction of the first interactive control. Optionally, the interactive control is changed from the first state to the second state by at least one of: changing the interactive control from static state to dynamic state; changing the interactive control from a first image into a second image; changing the interactive control from a first shape to a second shape; and changing the interactive control from a first size to a second size.

In an optional implementation, the method further includes: playing audio associated with the application scenario information, in response to the triggering on the interactive control. The process of playing the audio associated with the application scenario information may be performed at the same time as the interactive control changes from the first state to the second state, or after the interactive control has changed from the first state to the second state, which is not limited here. In addition, the process of playing the audio associated with the application scenario information and the process of changing from the first state to the second state have the same triggering condition, or may respond to different triggering conditions respectively, which will not be limited here.

In an optional implementation, when the first interactive control is a cake icon corresponding to the birthday scenario information, the second state is a flashing state.

In this embodiment, before the first interactive control is touched, the birthday cake icon is lightless, which is in a static state. When the first interactive control is touched, the candles on the birthday cake are lit, and a flashing dynamic effect is formed, to show the effect of the birthday cake more realistically, thereby expressing a real scenario of user B sending birthday wishes to user A. In addition, the flashing state may further be accompanied by the flashing halo around the birthday cake, to make the dynamic effect more obvious.

In an optional implementation, the method further includes: changing a data tag adjacent to the first interactive area from first data to second data, in response to the triggering instruction on the first interactive control.

As shown in Figure 3, the interactive data tag is displayed in real time at the adjacent position of the first interactive area. For example, the interactive data tag may be 12345. After user A posts the target object, the data tag for the interaction of the user B in the first interactive area is displayed synchronously on the adjacent position of the first interactive area at each client. The adjacent position may be located on the top, bottom, left, or right of the first interactive area, for example, located below the first interactive area. When the user B sends a triggering instruction in the first interactive area, the above data tag changes from 12345 to 12346, as an example.

In an optional implementation, the above method may further include step S208. In S208, in response to the triggering instruction on the first interactive control, first information associated with the application scenario information is sent to the target user. The target user is a poster of the target object, such as the above user A. The first information includes interactive information and preset information corresponding to the interactive control. For example, the first information includes likes information and greeting information.

When user B sends a triggering instruction in the first interactive area, the client may automatically respond to the triggering instruction and send the first information corresponding to the triggering instruction to user A. For example, when user B clicks on the birthday cake, it indicates that user B is intended to send greetings to user A. In this case, the client may automatically send the first information to user A. The first information includes two parts. One part is the interactive information corresponding to the interactive control. For example, no matter what the application scenario is, "XXX gave likes to you" or " XXX liked your work" may be displayed. The other part is the preset information associated with the application scenario, such as "Happy birthday to you", "Happy Spring Festival to you", " Happy Mid-Autumn Festival to you" and so on. Compared with the traditional approach of only pushing the interactive information corresponding to the interactive control, the first information pushed in this embodiment includes both the interactive information and preset information associated with the application scenario. In this way, the interactive information expression between user B and user A at special moments can be improved, the interaction enthusiasm and interests of both parties can be enhanced, and the overall interactive activity of client users can be improved.

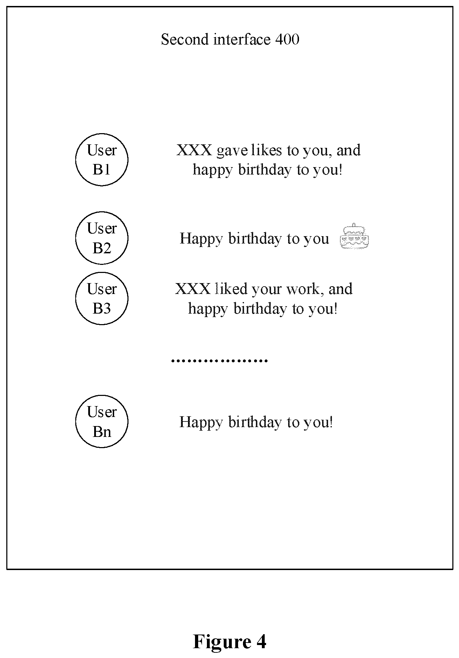

In an optional implementation, the first interface 300 further includes a second interactive area 304. The method further includes step S210: generating second information associated with the application scenario information, in response to acquiring input information of the second interactive area; sending the second information to a target user, to display the second information on a second interface, where the second interface is an interactive interface of the target user, and the target user is a poster of the target object, as shown in Figure 4.

As shown in Figure 3, the second interactive area 304 may be designed as an information input box at the bottom of the first interface 300. The information input box may be hidden under the first interface 300, and displayed at the bottom of the first interface 300 when being clicked. When the cursor moves to the second interactive area 304, information may be inputted in the information input box.

In an optional implementation, the input information includes at least one piece of preset input information associated with the application scenario information. The second information includes preset information corresponding to the preset input information. The preset input information may be displayed in the second interactive area 304. Optionally, the preset input information includes pattern information or text information.

In an optional implementation, when the preset input information includes pattern information, the preset information includes text information, or combination information of a text and a pattern.

Since the application scenario of the target object has been identified in advance, when information is input in the input box, in order to improve the efficiency of input information and simplify the input content, preset input information may be automatically provided as a candidate input pattern. As an example, in the case that the application scenario is a birthday scenario, when the cursor of the user stays in the input box, the birthday cake icon will be displayed automatically. At this time, user B may easily input information as long as clicking the birthday cake icon. Correspondingly, the second information matching the input birthday cake icon may be text information or combination information of the text and the pattern.

The second information may be text information. After user B enters the birthday cake icon, the text information may be automatically matched and sent to user A. For example, "Happy Birthday to you" or other text information matching the birthday cake icon may be sent. In this implementation, the input of information may be simplified and the greeting content transmitted by text information may be accurately expressed, which improves the convenience of interaction.

The second information may also be combination information of the text and the pattern. After user B enters the birthday cake icon, the text information may be automatically matched, which is followed by pattern information. Then, the combination information of the text and the pattern is sent to user A. As an example, "Happy birthday to you + cake icon" or other combination information of the text and the pattern matching the birthday cake icon is sent. In this implementation, the input of information may be simplified and the diverse greeting content delivered by text information and icon information may be accurately expressed, thereby improving the convenience and enjoyment of interaction.

In an optional implementation, the input information includes text information, and the second information includes combination information of a text and a pattern.

In an embodiment, the input information may be text information, and user B may send more diversified greeting content. Correspondingly, the second information is the combination information of the text and the pattern. As an example, after the user B enters the greeting information "sincerely wish XXX a happy birthday", the client may automatically generate the text information, which is followed by the automatically matched pattern information. The combination information of the text and the pattern is sent to user A. For example, "sincerely wish XXX a happy birthday + cake icon" or other combination information of the text and the pattern that matches the birthday cake icon may be sent. In this embodiment, the diversity of input text content is increased. In addition, the icon associated with the application scenario is automatically matched, improving the diversity and enjoyment of interaction.

In this embodiment, with the interaction method based on the application scenario information, the interaction process is associated with the application scenario information of the target object, thereby adding the interaction process in the specific application scenarios and improving the enthusiasm of both interacting parties. In addition, since the interactive information can automatically configure standard interactive content based on the application scenario information, the interactions are simpler and more convenient, to further improve the enthusiasm for the interactions.

According to another specific implementation of the present disclosure, an interaction method is provided, which is applied to the client of the user A as described above. That is, the interaction method is applied to a poster side of the target object. In this embodiment, the explanation of the same names/meanings is the same as the above embodiments and has the same technical effect as the above embodiments, which will not be repeated here. The method specifically includes steps S502 to S506 as follows.

In step S502, a target object is posted, where the target object includes application scenario information.

The target object may include long video files, short video files, dynamic picture files, static picture files, text files, and the like. The target object may be produced in advance. The pre-production process means that, before the target object is posted, a to-be-posted target object needs to be produced based on the client target object production process. In this embodiment, in order to facilitate the rapid production of the target object based on the application scenario, the one click making-video template provided by the client may be used. The one click making-video template specifically includes as follows.

User A manually selects pre-posted application scenario, such as selecting the birthday scenario, Mid-Autumn Festival scenario, Spring Festival scenario, etc. The application scenario may also be automatically pushed to a posting interface of the user A, based on the preset time of the user A.

Based on the application scenario, a specific target object is selected from the application scenario templates provided by the system. The target object may include basic content to be sent directly. For example, after selecting the birthday scenario, the target object may be a target object automatically generated in the birthday scenario. The target object may include title information and topic information which is automatically generated and match the birthday scenario. User A may also edit the title information and topic information to generate title information and topic information that meet personal requirements.

After the target object is produced, the target object may be posted by clicking "Post".

In step S504, a second interactive control is generated in a third interactive area of a third interface, based on the application scenario information, where the second interactive control is associated with the application scenario information.

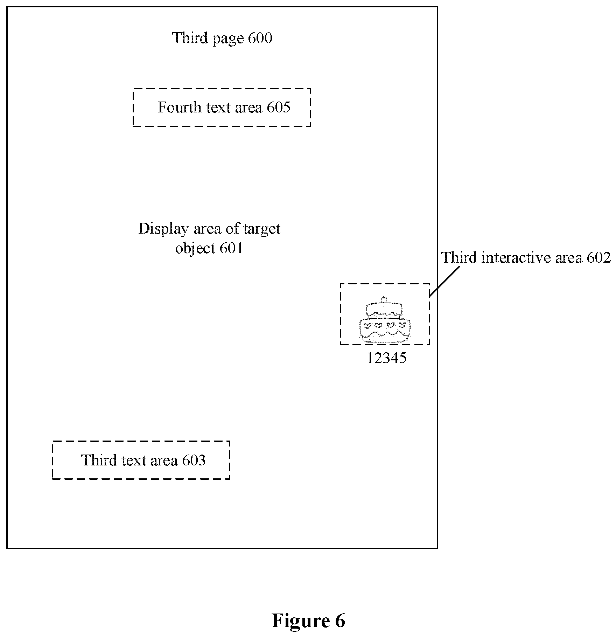

As shown in Figure 6, the third interface 600 includes a target object display area 601, a third text area 603, a fourth text area 605, and a third interactive area 602. The third text area 603 includes a title area and/or a topic area. Based on the application scenario information determined in the above steps, a second interactive control, such as a birthday cake icon, is generated in the third interactive area 602 of the third interface 600 at the client of user A. Unlit birthday candles may be displayed on the birthday cake icon. In the present disclosure, the second interactive control based on birthday scenario information is not unique. A variety of second interactive controls may be pre-designed. For example, a variety of birthday cakes with different shapes and patterns may be designed. The common shape of the birthday cake icon may be determined based on the preferences of the users from big data analysis.

In an optional implementation, the application scenario information includes birthday scenario information. The second interactive control includes multiple candidate cake icons which are selectable for displaying and correspond to the birthday scenario information.

In an optional implementation, the application scenario information includes wedding anniversary scenario information. The second interactive control includes multiple marriage certificate icons or heart icons which are selectable for displaying and corresponds to the wedding anniversary scenario information.

In an optional implementation, the application scenario information includes Mid-Autumn Festival scenario information. The second interactive control includes a moon cake icon corresponding to the Mid-Autumn Festival scenario information.

In an optional implementation, the application scenario information includes Dragon Boat Festival scenario information. The second interactive control includes a rice dumpling icon corresponding to the Dragon Boat Festival scenario information.

The second interactive control is displayed on the third interface, and the first interactive control is synchronously displayed on the first interface. Dynamic changes of the two controls are independent. When different users perform the interaction on the respective terminal interfaces, the states of the corresponding interactive controls may change independently.

In Step S506, the first information is displayed on the second interface, in response to receiving the first information.

As shown in Figure 6, the interaction data tag is displayed in real time adjacent to the third interactive area 602. For example, the interactive data tag may be 12345. After user A posts the target object, the data tag for the interaction of user B in the first interactive area is displayed synchronously on the adjacent position of the first interactive area at each client, while displayed synchronously in the adjacent position of the third interactive area 602. In an embodiment, user A may interact in the third interactive area with himself, i.e., giving likes or sending greetings to himself. In this case, the interaction data also changes synchronously. The adjacent position may be located on the upper, lower, left, or right of the third interactive area, for example, located below the third interactive area. When the user B sends a triggering instruction in the first interactive area, the above data tag changes from 12345 to 12346, as an example.

When user B sends a triggering instruction in the first interactive area, the client may automatically respond to the triggering instruction and send the first information corresponding to the triggering instruction to user A. For example, when user B lights the birthday cake, it indicates that user B is intended to send greetings to user A. In this case, the client may automatically send the first information to user A. The user A receives the first information and displays it on the second interface 400, as shown in Figure 4. The first information includes two parts. One part is the general information. For example, no matter what the application scenario is, "XXX gave likes to you" or " XXX liked your work" may be displayed. The other part is the greeting information associated with the application scenario, such as "Happy birthday to you", "Happy Spring Festival to you", " Happy Mid-Autumn Festival to you" and so on. Compared with the traditional approach of only pushing like information, the first information pushed in this embodiment includes both the general likes information and greeting information associated with the application scenario. In this way, the interactive information expression between user B and user A at special moments can be improved, the interaction enthusiasm and interests of both parties can be enhanced, and the overall interactive activity of client users can be improved.

As shown in Figure 6, user A self-interacts in the third interactive area by a touch control manner. The second interactive control is located in the third interactive area 602. In response to a triggering instruction on the second interactive control, a state of the second interactive control changes. That is, the second interactive control changes from a third state to a fourth state.

The interactive control is changed from the third state to the fourth state by at least one of changing the interactive control from static state to dynamic state; changing the interactive control from a third image into a fourth image; changing the interactive control from a third shape to a fourth shape; and changing the interactive control from a third size to a fourth size.

In an optional implementation, the method further includes: playing audio associated with the application scenario information, in response to the triggering on the interactive control. The process of playing the audio associated with the application scenario information may be performed at the same time as the interactive control changes from the third state to the fourth state, or after the interactive control has changed from the third state to the fourth state, which is not limited here. In addition, the process of playing the audio associated with the application scenario information and the process of changing from the third state to the fourth state have the same triggering condition, or may respond to different triggering conditions respectively, which is not limited here.

In an optional implementation, when the second interactive control is a cake icon corresponding to the birthday scenario information, the fourth state is a flashing state.

In this embodiment, before the second interactive control is touched, the birthday cake icon is lightless, which is in a static state. When the second interactive control is touched, the candles on the birthday cake are lit, and a flashing dynamic effect is formed, to show the effect of the birthday cake more realistically, thereby expressing a real scenario of user A sending birthday wishes to himself. In addition, the flashing state may further be accompanied by the flashing halo around the birthday cake, so as to make the dynamic effect more obvious.

In an optional implementation, the method further includes: displaying the second information on a second interface, in response to receiving the second information, wherein the second information is associated with the application scenario information, the second information includes text information or combination information of a text and a pattern.

The second information may be the text information. After user B inputs the birthday cake icon, the text information may be automatically matched and sent to user A. User A receives the second information, and the received second information is displayed on the second interface 400. For example, text information such as "Happy Birthday to you" that matches the birthday cake icon is sent. In this embodiment, user B may transmit the information to user A with a simple input and accurately express the greeting content transmitted by the text information, which improves the interaction convenience.

The second information may be the combination information of the text and the pattern. After user B inputs the birthday cake icon, the text information may be automatically matched, which is followed by pattern information. The combination information of the text and the pattern is sent to user A, and the received second information is displayed on the second interface 400. For example, "Happy Birthday to you + cake icon" or other combination information of the text and the pattern matching the birthday cake icon may be displayed. In this embodiment, user B may transmit the information to user A with a simple input and accurately express the diverse greeting content delivered by text information and icon information, thereby improving the convenience and enjoyment of interaction.

In this embodiment, with the interaction method based on the application scenario information, the interaction process is associated with the application scenario information of the target object, thereby adding the interaction process in the specific application scenarios and improving the enthusiasm of both interacting parties. In addition, since the interactive information can automatically configure standard interactive content based on the application scenario information, the interactions are simpler and more convenient, to further improve the enthusiasm for the interactions.

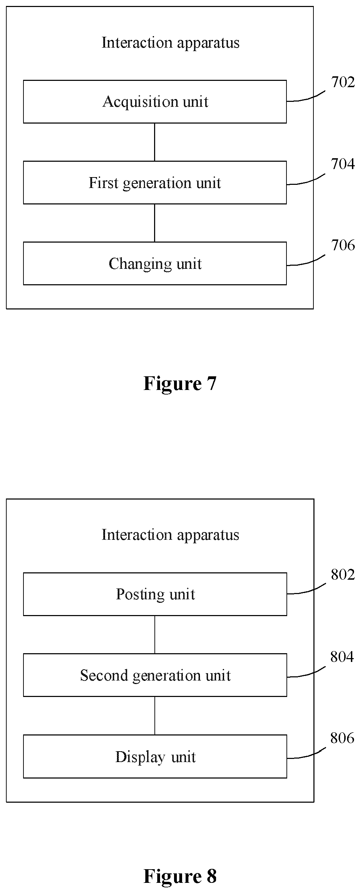

As shown in Figure 7, an interaction apparatus is provided according to a specific embodiment of the present disclosure. This embodiment is based on the embodiments as shown in Figure 2, which may implement the steps of the method in the above embodiments. In this embodiment, the explanation of the same names/meanings is the same as the above embodiments and has the same technical effects as the above embodiments, which will not be repeated here. According to a specific embodiment of the present disclosure, an interaction apparatus is provided. The interaction apparatus includes as follows.

An acquisition unit 702 is configured to acquire a target object and application scenario information associated with the target object, and present the target object on the first interface.

A first generation unit 704 is configured to generate a first interactive control in a first interactive area of the first interface based on the application scenario information, where the first interactive control is associated with the application scenario information.

A changing unit 706 is configured to change the first interactive control from a first state to a second state in response to a triggering instruction on the first interactive control.

In an optional implementation, the interaction apparatus further includes a determination unit configured to determine the application scenario information of the target object based on content information in the target object.

In an optional implementation, the content information includes image information, audio information, and/or text information. The above specific information may be applied in combinations or separately. The application scenario may be identified accurately by applying multiple pieces of information in combinations.

The determination unit is further configured to extract a key frame in the image information, and perform image recognition on the key frame, in a case that the content information includes image information.

The determination unit is further configured to extract audio content in the audio information, and perform voice recognition on the audio content, in a case that the content information includes audio information.

The determination unit is further configured to extract topic information from a topic information area, and identify the application scenario information based on the topic information, in a case that the content information includes the topic information.

The determination unit is further configured to extract title information from a title information area, and identify the application scenario information based on the title information, in a case that the content information includes the title information.

In an optional implementation, the determination unit is further configured to determine the application scenario information of the target object based on a preset time.

In an optional implementation, the determining the application scenario information of the target object based on the preset time and determining the application scenario information of the target object based on the content information in the target object may be combined in two or more manner, to determine the application scenario information more accurately. For example, based on a combination of the image information of the cake and the time information of the birthday date, the target object may be determined as a birthday application scenario, which will not be enumerated herein.

In an optional implementation, the application scenario information includes birthday scenario information, and the first interactive control includes multiple cake icons corresponding to the birthday scenario information that are selectable for displaying.

In an optional implementation, the application scenario information includes wedding anniversary scenario information, and the first interactive control includes multiple marriage certificate icons or heart icons corresponding to the wedding anniversary scenario information that are selectable for displaying.

In an optional implementation, the application scenario information includes Mid-Autumn Festival scenario information, and the first interactive control includes a moon cake icon corresponding to the Mid-Autumn Festival scenario information.

In an optional implementation, the application scenario information includes Dragon Boat Festival scenario information, and the first interactive control includes a rice dumpling icon corresponding to the Dragon Boat Festival scenario information.

In an optional implementation, the interactive control is changed from the first state to the second state by at least one of: changing the interactive control from static state to dynamic state; changing the interactive control from a first image into a second image; changing the interactive control from a first shape to a second shape; and changing the interactive control from a first size to a second size.

In an optional implementation, the changing unit 706 is further configured to play audio associated with the application scenario information in response to a triggering on the interactive control.

In an optional implementation, in a case that the first interactive control is a cake icon corresponding to the birthday scenario information, the second state is a flashing state.

In an optional implementation, the interaction apparatus further includes a changing unit configured to change a data tag adjacent to the first interactive area from first data to second data, in response to the triggering instruction on the first interactive control.

In an optional implementation, the interaction apparatus further includes a first sending unit configured to generate first information associated with the application scenario information, in response to the triggering on the interactive control, to display the first information on a second interface, where the second interface is an interactive interface of a client of a target user, the target user is a poster of the target object, and the first information includes likes information and greeting information.

In an optional implementation, the interaction apparatus further includes a second sending unit, and the first interface 300 further includes a second interactive area 304. The second sending unit is configured to generate second information associated with the application scenario information, in response to the input information in the second interactive area 304; send the second information to display the second information on the second interface 400, where the second interface 400 is an interactive interface of a client of a target user, the target user is a poster of the target object, as shown in Figure 4.

In an optional implementation, in a case that the input information includes pattern information, the second information includes text information or combination information of a text and a pattern.

In an optional implementation, in a case that the input information includes text information, the second information includes combination information of a text and a pattern.

In this embodiment, with the interaction apparatus based on the application scenario information, the interaction process is associated with the application scenario information of the target object, thereby adding the interaction process in the specific application scenarios and improving the enthusiasm of both interacting parties. In addition, since the interactive information can automatically configure standard interactive content based on the application scenario information, the interactions are simpler and more convenient, to further improve the enthusiasm for the interactions.

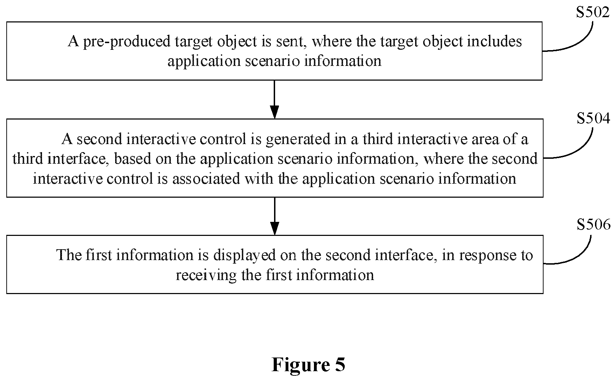

As shown in Figure 8, an interaction apparatus is provided according to a specific embodiment of the present disclosure. This embodiment is based on the embodiments as shown in Figure 5, which may implement the steps of the method in the above embodiments. In this embodiment, the explanation of the same names/meanings is the same as the above embodiments and has the same technical effects as the above embodiments, which will not be repeated here. According to a specific embodiment of the present disclosure, an interaction apparatus is provided. The interaction apparatus includes as follows.

A posting unit 802 configured to post a target object, where the target object includes application scenario information.

A second generation unit 804 configured to generate a second interactive control in a third interactive area of the third interface, based on the application scenario information, where the second interactive control is associated with the application scenario information.

A display unit 806 configured to display first information on a second interface in response to receiving the first information.

In an optional implementation, the application scenario information includes birthday scenario information, and the second interactive control includes multiple cake icons corresponding to the birthday scenario information that is selectable for displaying.

In an optional implementation, the application scenario information includes wedding anniversary scenario information, and the second interactive control includes multiple marriage certificate icons or heart icons corresponding to the wedding anniversary scenario information that is selectable for displaying.

In an optional implementation, the application scenario information includes Mid-Autumn Festival scenario information, and the second interactive control includes a moon cake icon corresponding to the Mid-Autumn Festival scenario information.

In an optional implementation, the application scenario information includes Dragon Boat Festival scenario information, and the second interactive control includes a rice dumpling icon corresponding to the Dragon Boat Festival scenario information.

As shown in Figure 6, user A self-interacts in the third interactive area in a touch control manner. The second interactive control is located in the third interactive area 602. In response to a triggering instruction on the second interactive control, the state of the second interactive control changes. That is, the second interactive control changes from a third state to a fourth state. Optionally, the interactive control is changed from the third state to the fourth state by at least one of: changing the interactive control from static state to dynamic state; changing the interactive control from a third image into a fourth image; changing the interactive control from a third shape to a fourth shape; and changing the interactive control from a third size to a fourth size.

In an optional implementation, the display unit 806 is further configured to play audio associated with the application scenario information, in response to the triggering on the interactive control. The process of playing the audio associated with the application scenario information may be performed at the same time as the process of changing the interactive control from the third state to the fourth state, or after the interactive control has changed from the third state to the fourth state, which is not limited here. In addition, the process of playing the audio associated with the application scenario information and the process of changing from the third state to the fourth state have the same triggering condition, or may respond to different triggering conditions respectively, which will not limited here.

In an optional implementation, in a case that the second interactive control is a cake icon corresponding to the birthday scenario information, the fourth state is a flashing state.

In an optional implementation, the display unit 806 is further configured to display second information on the second interface, in response to receiving the second information, where the second information is associated with the application scenario information, the second information includes text information or combination information of a text and a pattern.

In this embodiment, with the interaction apparatus based on the application scenario information, the interaction process is associated with the application scenario information of the target object, thereby adding the interaction process in the specific application scenarios and improving the enthusiasm of both interacting parties. In addition, since the interactive information can automatically configure standard interactive content based on the application scenario information, the interactions are simpler and more convenient, to further improve the enthusiasm for the interactions.

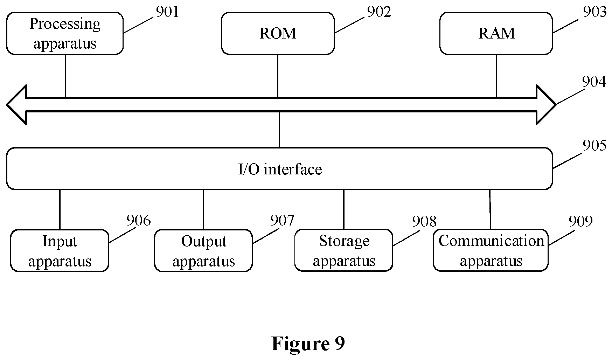

As shown in Figure 9, an electronic device is provided in this embodiment, the electronic device includes: at least one processor; and a memory having a communication connection with the at least one processor, where the memory stores instructions executable by the processor. The instructions, when executed by the at least one processor, cause the at least one processor to implement the steps of the method described in the above embodiments.

A non-transitory computer storage medium is provided according to an embodiment of the present disclosure. The computer storage medium stores computer executable instructions, and the computer executable instructions may implement the steps of the method described in the above embodiments.

Referring to Figure 9, Figure 9 illustrates a schematic structural diagram of an electronic device that is applicable to implement the embodiments of the present disclosure. The electronic device in the embodiment of the present disclosure may include, but not limited to, mobile terminals, such as mobile phones, laptops, digital broadcast receivers, PDAs (personal digital assistants), PADs (tablet computers), PMPs (portable multimedia players), vehicle-mounted terminals (such as in-vehicle navigation terminals) and the like, and stationary terminals such as digital TVs, desktop computers and the like. It should be noted that the electronic device shown in Figure 9 is only an example and should not impose any limitations on the functions and scope of use of the embodiments of the present disclosure.

As shown in Figure 9, the electronic device may include a processing apparatus (such as a central processor and a graphic processor) 901. The processing apparatus 901 may perform various appropriate actions and processing based on programs stored in a read-only memory (ROM) 902 or programs uploaded from a storage apparatus 908 to a random access memory (RAM) 903. Various programs and data required for operations of the electronic device are also stored in the RAM 903. The processing apparatus 901, the ROM 902 and the RAM 903 are connected to each other through the bus 904. An input/output (I/O) interface 905 is also connected to the bus 904.

Generally, the following apparatuses may be connected to the I/O interface 905: an input apparatus 906 such as a touch screen, a touch panel, a keyboard, a mouse, a camera, a microphone, an accelerometer, and gyroscope; an output apparatus 907 such as a liquid crystal display (LCD), a loudspeaker and a vibrator; a storage apparatus 908 such as a magnetic tape and a hard disk; and a communication apparatus 909. The communication apparatus 909 may allow the electronic device to communicate with other device in a wired or wireless manner to exchange data. Although Figure 9 illustrates the electronic device provided with various apparatuses, it should be understood that not all shown apparatuses are required to be implemented or included. Alternatively, more or less apparatuses may be implemented or included.

Particularly, according to the embodiments of the present disclosure, the process described above in conjunction with flowcharts may be implemented as a computer software program. For example, a computer program product is further provided according to an embodiment of the present disclosure, including a computer program carried on a computer readable medium. The computer program includes the program codes for implementing the methods as shown in the flowcharts. In the embodiment, the computer program may be downloaded and installed from the network via the communication apparatus 909, or installed from the storage apparatus 908, or installed from the ROM 902. When the computer program is executed by the processing apparatus 901, the functions defined in the methods according to the embodiments of the present disclosure are performed.

It should be noted that, the computer readable medium described in the present disclosure may be a computer readable signal medium, a computer readable storage medium or any combination thereof. The computer readable storage medium may include but not limited to a system, an apparatus or a device in an electric, magnetic, optical, electromagnetic, infrared or a semiconductor form, or any combination thereof. The more specific examples of the computer readable storage medium may include but not limited to electric connection of one or more wires, a portable computer magnetic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any appropriate combination thereof. In the present disclosure, the computer readable storage medium may be a tangible medium including or storing programs. The programs may be used by an instruction execution system, apparatus or device, or may be used in combination with the instruction execution system, apparatus or device. In the present disclosure, a computer readable signal medium may include a data signal in a baseband or propagated as a part of carrier. The computer readable signal medium carries computer readable program codes. The propagated data signal may be in a variety of forms, and include but not limited to an electromagnetic signal, an optical signal or any appropriate combination thereof. The computer readable signal medium may further be any computer readable medium other than the computer readable storage medium. The computer readable signal medium may send, propagate or transmit programs used by the instruction execution system, apparatus or device or the programs used in combination with the instruction execution system, apparatus or device. The program code embodied in the computer readable medium may be transmitted via any appropriate medium, including but not limited to an electric wire, an optical fiber, radio frequency (RF) or any appropriate combination thereof.

The above computer readable medium may be included in the electronic device above or may stand alone without being assembled into the electronic device.

In an embodiment of the present disclosure, computer program codes for performing steps of the present disclosure may be written by using one or more program design language or any combination. The program design language includes but not limited to object oriented program design language such as Java, Smalltalk and C++, and further includes conventional process-type program design language such as "C" or similar program design language. The program codes may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a local area network (LAN) and a wide area network (WAN). Alternatively, the remote computer may connect to an external computer (such as achieving internet connection by services provided by the internet network service provider).

The flowcharts and block diagrams in the drawings illustrate architectures, functions and operations which may be implemented by the system, method and computer program product according to the embodiments of the present disclosure. Each block in the flowcharts or the block diagram may represent a module, a program segment or part of codes including executable instruction(s) for implementing specified logic functions. It should be noted that, in some alternative implementations, the functions marked in blocks may be performed in an order different from the order shown in the drawings. For example, two blocks shown in succession may actually be executed in parallel, or sometimes may be executed in a reverse order, which depends on the functions involved. It should also be noted that each block in the block diagram and/or flow chart and a combination of the blocks in the block diagram and/or flow chart may be implemented by a dedicated hardware-based system that performs specified functions or operations, or may be realized by a combination of dedicated hardware and computer instructions.

The units mentioned in the description of the embodiments of the present disclosure may be implemented by means of software or otherwise by means of hardware. A name of the units does not constitute a limitation to the units in some case.

## Claims

1. An interaction method, comprising:
receiving (S202), by a client of a first user, a target object from a client of a target user, acquiring application scenario information associated with the target object, and presenting the target object on a first interface at the client of the first user, wherein the client of the first user is installed on a terminal device of the first user, and the client of the target user is installed on a terminal device of the target user; and
displaying (S204) an interactive control in a first interactive area of the first interface at the client of the first user based on the application scenario information, wherein the interactive control is associated with the application scenario information,
wherein the method further comprises:
generating first information associated with the application scenario information, in response to a triggering on the interactive control; and
triggering to send the first information to the client of the target user, to display the first information on a second interface, wherein the second interface is an interactive interface at the client of the target user, wherein the first information comprises interactive information corresponding to the interactive control and preset information associated with the application scenario.

2. The method according to claim 1, further comprising:
changing the interactive control from a first state to a second state, in response to a triggering on the interactive control; and
displaying the changed interactive control in the first interactive area.

3. The method according to claim 1, wherein the application scenario information is determined by at least one of:
determining the application scenario information based on content information in the target object; and
determining the application scenario information based on a preset time.

4. The method according to claim 3, wherein the content information comprises at least one of image information, audio information and text information.

5. The method according to claim 2, wherein the changing the interactive control from the first state to the second state comprises at least one of:
changing the interactive control from static state to dynamic state;
changing the interactive control from a first image into a second image;
changing the interactive control from a first shape to a second shape; and
changing the interactive control from a first size to a second size.

6. The method according to claim 1, further comprising:
playing audio associated with the application scenario information, in response to a triggering on the interactive control.

7. The method according to claim 1, wherein the first interface further comprises a second interactive area, and the method further comprises:
generating second information associated with the application scenario information, in response to acquiring input information of the second interactive area; and
sending the second information to the client of the target user to display the second information on a second interface, wherein the second interface is an interactive interface at the client of the target user, and the target user is a poster of the target object.

8. The method according to claim 7, wherein the input information comprises at least one piece of preset input information associated with the application scenario information, and the second information comprises preset information corresponding to the preset input information.

9. A computer readable storage medium storing a computer program, wherein the computer program, when executed by a processor (901), causes the processor (901) to implements the interaction method according to any one of claims 1 to 8.

10. An electronic device, comprising:
one or more processors (901); and
a storing apparatus (908) configured to store one or more programs,
wherein the one or more programs, when executed by the one or more processors (901), cause the one or more processors (901) to implement the interaction method according to any one of claims 1 to 8.

## Patentansprüche

1. Interaktionsverfahren, umfassend:
Empfangen (S202), durch einen Client eines ersten Benutzers, eines Zielobjekts von einem Client eines Zielbenutzers, Erfassen von Anwendungsszenarioinformationen, die mit dem Zielobjekt verknüpft sind, und Darstellen des Zielobjekts auf einer ersten Oberfläche auf dem Client des ersten Benutzers, wobei der Client des ersten Benutzers auf einer Endgerätvorrichtung des ersten Benutzers installiert ist und der Client des Zielbenutzers auf einer Endgerätvorrichtung des Zielbenutzers installiert ist; und
Anzeigen (S204) eines interaktiven Steuerelements in einem ersten interaktiven Bereich der ersten Oberfläche auf dem Client des ersten Benutzers, basierend auf den Anwendungsszenarioinformationen, wobei das interaktive Steuerelement mit den Anwendungsszenarioinformationen verknüpft ist,
wobei das Verfahren weiter umfasst:
Erzeugen erster Informationen, die mit den Anwendungsszenarioinformationen verknüpft sind, infolge eines Auslösens auf dem interaktiven Steuerelement; und
Auslösen vom Senden der ersten Information an den Client des Zielbenutzers, um die erste Information auf einer zweiten Oberfläche anzuzeigen, wobei die zweite Oberfläche eine interaktive Oberfläche beim Client des Zielbenutzers ist, wobei die ersten Informationen interaktive Informationen, die dem interaktiven Steuerelement entsprechen, und voreingestellte Informationen, die mit dem Anwendungsszenario verknüpft sind, umfassen.

2. Verfahren nach Anspruch 1, das weiter Folgendes umfasst:
Ändern des interaktiven Steuerelements von einem ersten Zustand in einen zweiten Zustand infolge eines Auslösens auf dem interaktiven Steuerelement; und
Anzeigen des geänderten interaktiven Steuerelements im ersten interaktiven Bereich.

3. Verfahren nach Anspruch 1, wobei die Anwendungsszenarioinformationen durch mindestens eines des Folgenden bestimmt werden:
Bestimmen der Anwendungsszenarioinformationen basierend auf Inhaltsinformationen im Zielobjekt; und
Bestimmen der Anwendungsszenarioinformationen basierend auf einer voreingestellten Zeit.

4. Verfahren nach Anspruch 3, wobei die Inhaltsinformationen mindestens eine von Bildinformationen, Audioinformationen und Textinformationen umfassen.

5. Verfahren nach Anspruch 2, wobei das Ändern des interaktiven Steuerelements vom ersten Zustand in den zweiten Zustand mindestens eines des Folgenden umfasst:
Ändern des interaktiven Steuerelements vom statischen Zustand in den dynamischen Zustand;
Ändern des interaktiven Steuerelements von einem ersten Bild zu einem zweiten Bild;
Ändern des interaktiven Steuerelements von einer ersten Form zu einer zweiten Form; und
Ändern des interaktiven Steuerelements von einer ersten Größe zu einer zweiten Größe.

6. Verfahren nach Anspruch 1, das weiter Folgendes umfasst:
Wiedergeben von Audio, das mit den Anwendungsszenarioinformationen verknüpft ist, infolge eines Auslösens auf dem interaktiven Steuerelement.

7. Verfahren nach Anspruch 1, wobei die erste Schnittstelle weiter einen zweiten interaktiven Bereich umfasst, und das Verfahren weiter umfasst:
Erzeugen zweiter Informationen, die mit den Anwendungsszenarioinformationen verknüpft sind, infolge des Ermittelns von Eingabeinformationen des zweiten interaktiven Bereichs; und
Senden der zweiten Informationen an den Client des Zielbenutzers, um die zweite Information auf einer zweiten Oberfläche anzuzeigen, wobei die zweite Oberfläche eine interaktive Oberfläche auf dem Client des Zielbenutzers ist und der Zielbenutzer ein Poster des Zielobjekts ist.

8. Verfahren nach Anspruch 7, wobei die Eingabeinformationen mindestens ein Stück voreingestellter Eingabeinformation umfassen, die mit den Anwendungsszenarioinformationen verknüpft ist, und die zweiten Informationen voreingestellte Informationen umfassen, die den voreingestellten Eingabeinformationen entsprechen.

9. Computerlesbares Speichermedium, das ein Computerprogramm speichert, wobei das Computerprogramm, wenn es von einem Prozessor (901) ausgeführt wird, den Prozessor (901) veranlasst, das Interaktionsverfahren nach einem der Ansprüche 1 bis 8 zu implementieren.

10. Elektronische Vorrichtung, umfassend:
einen oder mehrere Prozessoren (901); und
eine Speichereinrichtung (908), die zum Speichern von einem oder mehreren Programmen konfiguriert ist;
wobei das eine oder die mehreren Programme, wenn sie von dem einen oder den mehreren Prozessoren (901) ausgeführt werden, den einen oder die mehreren Prozessoren (901) dazu veranlassen, das Interaktionsverfahren nach einem der Ansprüche 1 bis 8 zu implementieren.

## Revendications

1. Procédé d'interaction, comprenant :
la réception (S202), par l'intermédiaire d'un client d'un premier utilisateur, d'un objet cible provenant d'un client d'un utilisateur cible, l'acquisition des informations de scénario d'application associé à l'objet cible et la présentation de l'objet cible sur une première interface au niveau du client du premier utilisateur, dans lequel le client du premier utilisateur est installé sur un terminal du premier utilisateur et le client de l'utilisateur cible est installé sur un terminal de l'utilisateur cible ; et
l'affichage (S204) d'une commande interactive dans une première zone interactive de la première interface au niveau du client du premier utilisateur sur la base des informations de scénario d'application, dans lequel la commande interactive est associée aux informations de scénario d'application,
dans lequel le procédé comprend en outre :
la génération des premières informations associées aux informations de scénario d'application, en réponse à un déclenchement sur la commande interactive ; et
le déclenchement d'un envoi des premières informations au client de l'utilisateur cible, afin d'afficher les premières informations sur une seconde interface, dans lequel la seconde interface est une interface interactive au niveau du client de l'utilisateur cible, dans lequel les premières informations comprennent des informations interactives correspondant à une commande interactive et à des informations prédéfinies associées au scénario d'application.

2. Procédé selon la revendication 1, comprenant en outre :
le changement de la commande interactive d'un premier état à un second état, en réponse à un déclenchement sur la commande interactive ; et
l'affichage de la commande interactive modifiée dans la première zone interactive.

3. Procédé selon la revendication 1, dans lequel les informations de scénario d'application sont déterminées par au moins une des étapes suivantes :
la détermination des informations de scénario d'application sur la base des informations de contenu dans l'objet cible ; et
la détermination des informations de scénario d'application sur la base d'un intervalle de temps prédéfini.

4. Procédé selon la revendication 3, dans lequel les informations de contenu comprennent au moins certaines parmi des informations d'image, des informations audio et des informations textuelles.

5. Procédé selon la revendication 2, dans lequel le changement de la commande interactive du premier état au second état comprend au moins l'une des étapes de :
changement de la commande interactive d'un état statique à un état dynamique ;
changement de la commande interactive d'une première image à une seconde image ;
changement de la commande interactive d'une première forme à une seconde forme ; et
changement de la commande interactive d'une première taille à une seconde taille.

6. Procédé selon la revendication 1, comprenant en outre :
la lecture d'un audio associé aux informations de scénario d'application, en réponse à un déclenchement sur la commande interactive.

7. Procédé selon la revendication 1, dans lequel la première interface comprend en outre une seconde zone interactive, et le procédé comprend en outre :
la génération des secondes informations associées aux informations de scénario d'application, en réponse à l'acquisition d'informations d'entrée de la seconde zone interactive ; et
l'envoi des secondes informations au client de l'utilisateur cible pour afficher les secondes informations sur une seconde interface, dans lequel la seconde interface est une interface interactive au niveau du client de l'utilisateur cible, et l'utilisateur cible est un expéditeur de l'objet cible.

8. Procédé selon la revendication 7, dans lequel les informations d'entrée comprennent au moins une information d'entrée prédéfinie associée aux informations de scénario d'application, et les secondes informations comprennent des informations prédéfinies correspondant à l'information d'entrée prédéfinie.

9. Support de stockage lisible par ordinateur stockant un programme informatique, dans lequel le programme informatique, lorsqu'il est exécuté par un processeur (901), amène le processeur (901) à mettre en œuvre le procédé d'interaction selon l'une quelconque des revendications 1 à 8.

10. Dispositif électronique, comprenant :
un ou plusieurs processeurs (901) ; et
un appareil de stockage (908) configuré pour stocker un ou plusieurs programmes,
dans lequel les un ou plusieurs programmes, lorsqu'ils sont exécutés par les un ou plusieurs processeurs (901), amènent les un ou plusieurs processeurs (901) à mettre en œuvre le procédé d'interaction selon l'une quelconque des revendications 1 à 8.
